# EUROPEAN PATENT APPLICATION

(11) **EP 3 883 203 A1**
(43) Date of publication of application: **22.09.2021**
(21) Application number: 18944527.3
(22) Date of filing: 26.12.2018
(51) Int. Cl.: H04L 29/06, H04L 29/12

(54) **IPV6 ADDRESS CONFIGURATION METHOD AND ROUTER DEVICE**

(71) Applicant: Huawei Technologies Co., Ltd., Shenzhen Guangdong 518129 (CN)
(72) Inventor: MAO, Fangzhu, Shenzhen, Guangdong 518129 (CN); DAI, Wenlei, Shenzhen, Guangdong 518129 (CN); LI, Chenggang, Shenzhen, Guangdong 518129 (CN); REN, Bin, Shenzhen, Guangdong 518129 (CN); HU, Haitao, Shenzhen, Guangdong 518129 (CN)
(74) Representative: Gill Jennings & Every LLP
(86) International application number: PCT/CN2018/124031
(87) International publication number: WO 2020/132984

(57) **Abstract**

An IPv6 address configuration method and a routing device are provided. The method is applied to a routing device supporting an IPv6 protocol stack. The method includes: A routing device generates a router advertisement packet, where the router advertisement packet includes first information and second information, the first information is used to indicate a terminal device to obtain an IPv6 address in a DHCPv6 manner, and the second information is used by the terminal device to obtain an IPv6 address in an IPv6 stateless autoconfiguration manner; and the routing device sends the router advertisement packet to the terminal device. Because the RA packet sent by the routing device may include the information required by an IPv6 address configuration manner supporting the DHCPv6 and an IPv6 address configuration manner supporting the IPv6 stateless autoconfiguration, the routing device can be compatible with different types of terminal devices, so that all types of terminal devices can use IPv6 addresses to access the internet.

## Description

### TECHNICAL FIELD

This application relates to the field of communication technologies, and in particular, to an IPv6 address configuration method and a routing device.

### BACKGROUND

Currently, a terminal device usually obtains an internet protocol version 6 (internet protocol version6, IPv6) address in two manners. One is stateless address autoconfiguration, which means that a client obtains an IPv6 address based on a router advertisement (router advertisement, RA) and interface information of the client. The other is stateful address autoconfiguration, and is also referred to as a dynamic host configuration protocol for IPv6 (dynamic host configuration protocol for IPv6, DHCPv6) manner, which means that a client obtains an IPv6 address and other information through a DHCPv6 server. In the conventional technology, degrees of support of different types of terminals for the two address configuration manners are different. Some types of terminals may support either of the two configuration manners, and some types of terminals may support both of the two configuration manners. Because a routing device is not yet well compatible with different types of terminals, some types of terminals may not be able to access the internet through IPv6.

### SUMMARY

Embodiments of this application provide an IPv6 address configuration method and a routing device, to be compatible with two IPv6 address configuration manners, so that all types of terminals can access the internet by using IPv6 addresses.

According to a first aspect, this application provides an IPv6 address configuration method, and the method includes: A routing device generates a router advertisement packet, where the router advertisement packet includes first information and second information, the first information is used to indicate a terminal device to obtain an IPv6 address in a DHCPv6 manner, the second information is used by the terminal device to obtain an IPv6 address in an IPv6 stateless autoconfiguration manner, and the routing device is a routing device that supports an IPv6 protocol stack; and the routing device sends the router advertisement packet to the terminal device.

According to the technical solution in this embodiment of this application, the router advertisement packet sent by the routing device may include the information required by the IPv6 address configuration manner supporting the DHCPv6 and the IPv6 address configuration manner supporting the IPv6 stateless autoconfiguration. When the terminal device supports obtaining the IPv6 address in the DHCPv6 manner, the terminal device may trigger, based on the indication of the first information, a DHCPv6 obtaining process of the IPv6 address, to obtain the IPv6 address allocated by the routing device to the terminal device. When the terminal device supports obtaining the IPv6 address in the IPv6 stateless autoconfiguration manner, the terminal device may trigger, based on the indication of the second information, an obtaining process corresponding to the stateless autoconfiguration manner. In this way, different types of terminal devices can be compatible with, so that all types of terminal devices can use IPv6 addresses to access the internet.

In a possible design, the router advertisement packet further includes third information and prefix information, the third information is used to indicate the terminal device to obtain an IPv6 address of a DNS server in the DHCPv6 manner, and the prefix information is used to support the terminal device in obtaining an IPv6 address in the IPv6 stateless autoconfiguration manner.

In a possible design, the first information is managed address configuration information, the second information is recursive DNS server information, and the third information is other stateful configuration information.

In a possible design, after that the routing device sends the router advertisement packet to the terminal device, the method further includes: The routing device receives a DHCPv6 request packet sent by the terminal device; the routing device sends a DHCPv6 advertisement packet to the terminal device, where the DHCPv6 advertisement packet includes a first IPv6 address allocated to the terminal device; the routing device receives a DHCPv6 solicitation packet sent by the terminal device, where the DHCPv6 solicitation packet includes an IPv6 address selected by the terminal device; and the routing device sends a DHCPv6 reply packet to the terminal device if determining that the IPv6 address selected by the terminal device is the first IPv6 address.

According to a second aspect, this application provides another IPv6 address configuration method. The method includes: A routing device receives a router solicitation packet sent by a terminal device, and determines a type of the terminal device based on the router solicitation packet; and the routing device sends a router advertisement packet to the terminal device based on the type of the terminal device, where the router advertisement packet includes first information or second information; when the type of the terminal device indicates that the terminal device supports obtaining an IPv6 address in a DHCPv6 manner, the router advertisement packet includes the first information, where the first information is used to indicate the terminal device to obtain the IPv6 address in the DHCPv6 manner; and when the type of the terminal device indicates that the terminal device supports obtaining an IPv6 address in an IPv6 stateless autoconfiguration manner, the router advertisement packet includes the second information, where the second information is used to indicate the terminal device to obtain the IPv6 address in the IPv6 stateless autoconfiguration manner.

According to the technical solution in this embodiment of this application, the routing device can carry, in the RA packet based on the type of the terminal device, the information corresponding to the IPv6 address configuration manner supported by the routing device. In this way, the routing device can be compatible with different types of terminal devices, so that all types of terminal devices can use IPv6 addresses to access the internet. In addition, the routing device can implement just enough information exchange. This reduces information redundancy in the RA packet to a greatest extent, and effectively improves flexibility and efficiency of IPv6 address configuration.

In a possible design, the router solicitation packet includes a MAC address of the terminal device; and that a routing device determines a type of the terminal device based on the router solicitation packet includes: The routing device determines the type of the terminal device based on the MAC address of the terminal device.

In a possible design, when the type of the terminal device indicates that the terminal device supports obtaining an IPv6 address in the DHCPv6 manner, the router advertisement packet further includes third information, where the third information is used to indicate the terminal device to obtain an IPv6 address of a DNS server in the DHCPv6 manner; and when the type of the terminal device indicates that the terminal device supports obtaining an IPv6 address in the IPv6 stateless autoconfiguration manner, the router advertisement packet further includes prefix information, where the prefix information is used to support the terminal device in obtaining the IPv6 address in the IPv6 stateless autoconfiguration manner.

In a possible design, the first information is managed address configuration information, the second information is recursive DNS server information, and the third information is other stateful configuration information.

In a possible design, when the type of the terminal device indicates that the terminal device supports obtaining an IPv6 address in the DHCPv6 manner, after that the routing device sends a router advertisement packet to the terminal device, the method further includes: The routing device receives a DHCPv6 request packet sent by the terminal device; the routing device sends a DHCPv6 advertisement packet to the terminal device, where the DHCPv6 advertisement packet includes a first IPv6 address allocated to the terminal device; the routing device receives a DHCPv6 solicitation packet sent by the terminal device, where the DHCPv6 solicitation packet includes an IPv6 address selected by the terminal device; and the routing device sends a DHCPv6 reply packet to the terminal device if determining that the IPv6 address selected by the terminal device is the first IPv6 address.

According to a third aspect, an embodiment of this application provides a routing device. The routing device has a function of implementing the routing device in any one of the first aspect or the possible designs of the first aspect. The function may be implemented by hardware, or may be implemented by hardware executing corresponding software. The hardware or the software includes one or more modules corresponding to the function.

In a possible design, a structure of the routing device includes a processing module and a communication module. The processing module is configured to support the routing device in performing the corresponding function in any one of the first aspect or the designs of the first aspect. The communication module is configured to support communication between the routing device and another communication device (for example, a terminal device). The routing device may further include a storage module. The storage module is coupled to the processing module. The storage module stores program instructions and data that are necessary for the routing device. In an example, the processing module may be a processor, the communication module may be a transceiver, and the storage module may be a memory.

According to a fourth aspect, an embodiment of this application provides a routing device. The routing device has a function of implementing the routing device in any one of the second aspect or the possible designs of the second aspect. The function may be implemented by hardware, or may be implemented by hardware executing corresponding software. The hardware or the software includes one or more modules corresponding to the function.

In a possible design, a structure of the routing device includes a processing module and a communication module. The processing module is configured to support the routing device in performing the corresponding function in any one of the first aspect or the designs of the first aspect. The routing device module is configured to support communication between the routing device and another communication device (for example, a terminal device). The routing device may further include a storage module. The storage module is coupled to the processing module. The storage module stores program instructions and data that are necessary for the routing device. In an example, the processing module may be a processor, the communication module may be a transceiver, and the storage module may be a memory.

According to a fifth aspect, an embodiment of this application provides a chip. The chip is coupled to a memory, and is configured to read and execute a software program stored in the memory, to implement the method in any possible design in the first aspect or implement the method in any possible design in the second aspect.

According to a sixth aspect, an embodiment of this application provides a computer-readable storage medium. The computer storage medium stores computer-readable instructions. When a computer reads and executes the computer-readable instructions, the computer is enabled to perform the method in any possible design in the first aspect or perform the method in any possible design in the second aspect.

According to a seventh aspect, an embodiment of this application provides a computer program product. When a computer reads and executes the computer program product, the computer is enabled to perform the method in any possible design in the first aspect or perform the method in any possible design in the second aspect.

### BRIEF DESCRIPTION OF DRAWINGS

FIG. 1 is a network architectural diagram of a communication system to which an embodiment of this application is applicable;
FIG. 2 is a network architectural diagram of an optical access network to which an embodiment of this application is applicable;
FIG. 3 is a schematic flowchart corresponding to an IPv6 address configuration method according to an embodiment of this application;
FIG. 4 is a schematic flowchart of a DHCPv6 process according to an embodiment of this application;
FIG. 5 is another schematic flowchart of an IPv6 address configuration method according to an embodiment of this application;
FIG. 6 is a schematic flowchart corresponding to another IPv6 address configuration method according to an embodiment of this application;
FIG. 7 is another schematic flowchart of another IPv6 address configuration method according to an embodiment of this application;
FIG. 8 is still another schematic flowchart of another IPv6 address configuration method according to an embodiment of this application;
FIG. 9 is a schematic structural diagram of a routing device according to an embodiment of this application; and
FIG. 10 is another schematic structural diagram of a routing device according to an embodiment of this application.

### DESCRIPTION OF EMBODIMENTS

To make the objectives, technical solutions, and advantages of this application clearer, the following describes embodiments of this application in detail with reference to the accompanying drawings in this specification. It should be noted that the terms used in implementations of this application are merely used to explain specific embodiments of this application, but are not intended to limit this application.

In the following descriptions, unless otherwise stated, ordinal numbers such as "first" and "second" are merely intended for description, and shall not be understood as an indication or implication of relative importance or an indication or implication of an order.

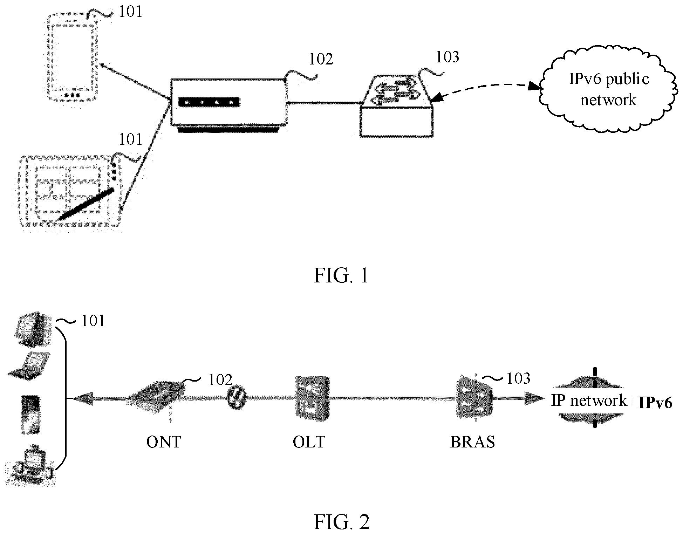

FIG. 1 shows an example of a network architecture of a communication system to which an embodiment of this application is applicable. As shown in FIG. 1, the communication system includes a terminal device 101 and a routing device 102. Further, the communication system may further include a gateway 103.

The terminal device 101 refers to any electronic device that needs to access the internet (referring to an electronic device connected to an IPv6 public network). For example, the terminal device 101 may be a device such as a computer, a notebook computer, a smartphone, a tablet computer, or an intelligent wearable device, or may be another household device. The terminal device may be connected to the routing device in a wired or wireless manner, to communicate with the IPv6 public network. In this embodiment of this application, terminal devices may be classified into a plurality of types based on different operating systems installed on the terminal devices. For example, a terminal device on which an Android Android operating system is installed may be a type of terminal device, a terminal device on which a Windows 7 operating system is installed may be a type of terminal device, and a terminal device on which an iOS operating system is installed may also be a type of terminal device. Certainly, a type of an operating system installed on the terminal device is not specifically limited in this embodiment of this application. A Windows 10 operating system may be further installed on the terminal device, or another operating system, for example, an operating system derived from a native Android system, may be installed on the terminal device. Regardless of which type of operating system is installed on the terminal device, the terminal device supports IPv6 in the following three ways. 1: Support obtaining an IPv6 address in a DHCPv6 manner. 2: Support obtaining an IPv6 address in an IPv6 stateless address autoconfiguration manner, namely, in an RA manner. 3: Support obtaining an IPv6 address in both a DHCPv6 manner and an IPv6 stateless address autoconfiguration manner.

The routing device 102 is a routing device supporting an IPv6 protocol stack, and includes a local area network port connected to the terminal device and a wide area network port connected to the gateway. Correspondingly, the routing device 102 communicates with the terminal device through the local area network port and communicates with the gateway through the wide area network port. In this embodiment of this application, the routing device may be configured to centrally manage terminal devices, and the routing device has a DHCPv6 function. For example, when the terminal device obtains the IPv6 address in the DHCPv6 manner, the routing device may be used as a DHCPv6 protocol server to provide a DHCPv6 service, and configure the IPv6 address for the terminal device. In this case, the terminal device exists as a DHCPv6 protocol client. For another example, when the terminal device obtains the IPv6 address in the IPv6 stateless autoconfiguration manner, the routing device may allocate prefix information prefix to the terminal device by using an RA packet, so that the terminal device generates a unicast IPv6 address by using a random algorithm based on the prefix information and interface information of the terminal device. Usually, the interface information of the terminal device may be determined based on a media access control (media access control address, MAC) address of the terminal device.

It should be noted that, although FIG. 1 shows only one terminal device 101, it should be understood that the communication system may include one or more terminal devices, and the routing device may be connected to all of the terminal devices through different local area network ports. This is not specifically limited in this application. In a similar way, the communication system may also include a plurality of routing devices. This is not limited, either.

In a possible implementation, the routing device may be customer-premises equipment (customer premises equipment, CPE) or a wireless access point (wireless access point, AP), and is configured to enable various types of terminal devices to access a network. In another possible implementation, when the communication system is specifically an optical access network, as shown in FIG. 2, the routing device may alternatively be an optical network terminal (optical network terminal, ONT) or an optical network unit (optical network unit, ONU) in the optical access network. An example in which the routing device is the ONT is used. In the optical access network, the ONT is usually used in cooperation with an optical line terminal (optical line terminal, OLT), and is connected to the gateway 103 through the OLT.

The gateway 103 is a gateway device located at an edge of an IPv6 backbone network. For example, the gateway may be a broadband remote access server (broadband remote access server, BRAS) or a border router (border router, BR).

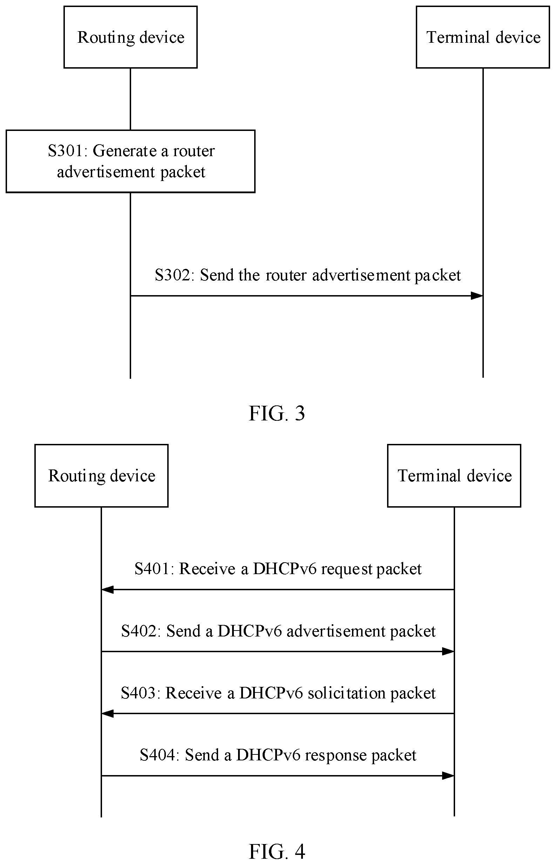

Based on the foregoing network structure, FIG. 3 shows an example of an IPv6 address configuration method according to an embodiment of this application. As shown in FIG. 3, the method includes the following steps.

Step S301: A routing device generates a router advertisement packet, where the router advertisement packet includes first information and second information, the first information is used to indicate the terminal device to obtain an IPv6 address in a DHCPv6 manner, the second information is used by a terminal device to obtain an IPv6 address in an IPv6 stateless autoconfiguration manner.

Step S302: The routing device sends the router advertisement packet to the terminal device.

In a possible design, before step S301 is performed, this embodiment of this application may further include the following step S300.

Step S300: The routing device receives a router solicitation (router solicitation, RS) packet sent by the terminal device.

In step S300, the RS packet is actively sent by the terminal device to the routing device, and is used to discover a routing device that supports IPv6 and that is reachable on a link, and trigger the routing device to send an RA packet to the terminal device. Subsequently, the terminal device may allocate an IPv6 address and other network configuration information to the terminal device through the discovered routing device, for example, an IP address of a domain name system (domain name system, DNS) server.

Subsequently, in step S301, after receiving the RS packet, the routing device may generate the router advertisement (router advertisement, RA) packet that carries the first information and the second information.

Further, in step S302, the routing device may send the RA packet to the terminal device, so that the terminal device obtains the IPv6 address in the DHCPv6 manner or in the IPv6 stateless autoconfiguration manner.

Still further, the RA packet sent by the routing device in step S302 may further include third information and prefix information. The third information is used to indicate the terminal device to obtain an IPv6 address of a DNS server in the DHCPv6 manner, and the prefix information is used to support the terminal device in obtaining an IPv6 address in the IPv6 stateless autoconfiguration manner. The prefix information may be a global address prefix of the IPv6 address

If the terminal device supports obtaining the IPv6 address only in the DHCPv6 manner, after receiving the RA packet, the terminal device may trigger, based on an indication of the first information, a DHCPv6 process shown in FIG. 4. The process specifically includes the following steps.

Step S401: The routing device receives a DHCPv6 request solicit packet sent by the terminal device, where the DHCPv6 solicit packet is used to request the routing device to allocate the IPv6 address and other network configuration information, for example, the IPv6 address of the DNS server, to the terminal device.

Step S402: The routing device sends a DHCPv6 advertisement advertise packet to the terminal device, where the DHCPv6 advertise packet carries a first IPv6 address and other network configuration information that are allocated by the routing device to the terminal device.

Step S403: The routing device receives a DHCPv6 solicitation request packet sent by the terminal device, where the DHCPv6 request packet includes an IPv6 address selected by the terminal device.

In an actual application scenario, that the terminal device sends the DHCPv6 solicit packet to the routing device may be that the terminal device sends the DHCPv6 solicit packet to a multicast address (for example, ff02::1:2). In this way, all routing devices that receive the DHCPv6 solicit packet send the DHCPv6 advertise packet to the terminal device, and the DHCPv6 advertise packet sent by each routing device includes an identifier of the routing device itself, for example, a DHCP unique identifier (dhcp unique identifier, DUID) of the routing device. If the terminal device receives a plurality of DHCPv6 advertise packets, the terminal device may select a routing device based on parameters such as a DHCPv6 server priority that are carried in the DHCPv6 advertise packets. The terminal device may select a routing device with a highest DHCPv6 server priority, and broadcast the DHCPv6 request packet to all the routing devices in step S403, that is, send the DHCPv6 request packet to the multicast address. The DHCPv6 request packet carries an identifier of the selected routing device and/or the IPv6 address selected by the terminal device that is, the selected IPv6 address allocated by the routing device to the terminal device.

Step S404: If determining that the IPv6 address selected by the terminal device is the first IPv6 address, the routing device sends a DHCPv6 reply packet to the terminal device.

If the routing device determines, based on the received DHCPv6 request packet, that the IPv6 address selected by the terminal device is the first IPv6 address allocated by the routing device to the terminal device, and/or that the identifier of the routing device carried in the DHCPv6 request packet is the identifier of the routing device, the routing device confirms that the first IPv6 address and the other corresponding network configuration information are allocated to the terminal device for use, and sends the DHCPv6 reply packet to the terminal device.

If the terminal device supports obtaining the IPv6 address only in the IPv6 stateless autoconfiguration manner, the terminal device can obtain, from the RA packet, the prefix information configured by the routing device for the terminal device, and then use a random algorithm to obtain, through calculation, the IPv6 address based on the prefix information and interface information of the terminal device, for example, a MAC address of the routing device.

When the terminal device supports obtaining the IPv6 address in both the DHCPv6 manner and the stateless autoconfiguration manner, the terminal device may freely select either of the two manners. This is not specifically limited in this embodiment of this application.

It should be noted that a person skilled in the art may properly configure the first information, the second information, the third information, and the like based on functions of fields in the RA packet. In a possible implementation, the first information may be managed address configuration (managed address configuration) information. The managed address configuration information is also referred to as an M flag. The M flag is a field that occupies 1 bit in the RA packet. When the M flag is set to 1, it indicates that the terminal device should obtain a stateful IPv6 address in the DHCPv6 manner. The second information may be recursive DNS server information. The recursive DNS server information may be a recursive DNS server (recursive DNS server, RDNSS) option option field in the RA packet. The option field includes IPv6 addresses of one or more recursive DNS servers. When the option field includes IPv6 addresses of a plurality of recursive DNS servers, the IPv6 addresses of the plurality of recursive DNS servers have a same life cycle. The third information may be other configuration (other configuration) information. The other configuration information is also referred to as an O flag. The O flag is the same as the M flag, and is a field that occupies 1 bit in the RA packet. When the O identifier is set to 1, it indicates that the terminal device should obtain, in the DHCPv6 manner, the other network configuration information other than the IPv6 address, for example, an IPv6 address and a domain name of a DNS server.

According to the technical solution in this embodiment of this application, the RA packet sent by the routing device may include indication information required for supporting the two IPv6 address configuration manners. When the terminal device supports obtaining the IPv6 address in the DHCPv6 manner, the terminal device may trigger the DHCPv6 obtaining process of the IPv6 address based on an indication of the first information and the third information, to obtain the IPv6 address and the other network configuration information. When the terminal device supports obtaining the IPv6 address in the IPv6 stateless autoconfiguration manner, the terminal device may trigger, based on an indication of the second information, an obtaining process corresponding to the stateless autoconfiguration manner; and obtain, from the RA packet, the prefix information required for generating the IPv6 address. In this way, the prefix information can be compatible with different types of terminal devices, so that all types of terminal devices can use IPv6 addresses to access the internet.

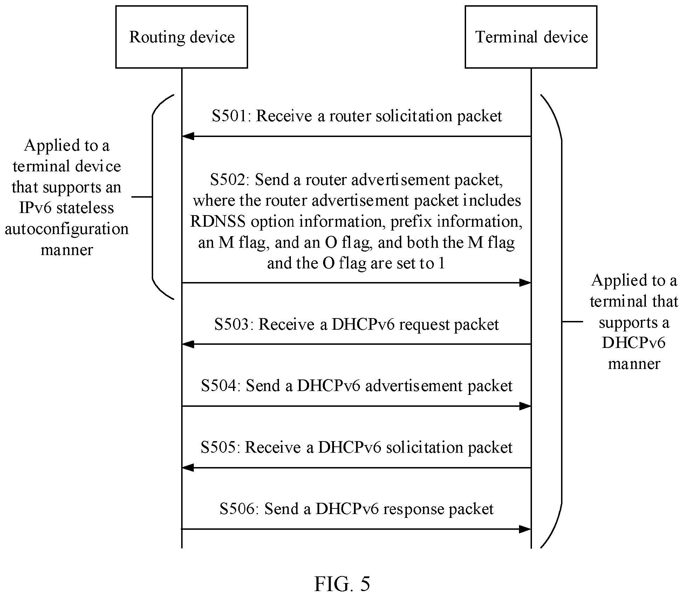

For example, as shown in step S501 to step S506 in FIG. 5, the routing device may set the M identifier and the O identifier in the RA packet to 1, and further include, in the RA packet, the RDNSS option field and a 64-bit global address prefix that is used for IPv6 stateless autoconfiguration. The RDNSS option field includes the IPv6 addresses of the one or more recursive DNS servers. An Android terminal device does not support obtaining the IPv6 address in the DHCPv6 manner, but supports obtaining the IPv6 address in the IPv6 stateless autoconfiguration manner. Therefore, after receiving the RA packet, the Android terminal device finds that the RA packet carries the RDNSS option field, and may obtain the IPv6 address in the stateless autoconfiguration manner based on the global address prefix in the RA packet and a MAC address of the terminal device. In addition, because DHCPv6 is not supported, the Android terminal device may directly ignore the M identifier and the O identifier that are specified in the RA packet, and does not perform any processing.

Because a terminal device of a Windows 7 type does not support obtaining the IPv6 address in the IPv6 stateless autoconfiguration manner, the terminal device of the Windows 7 partially supports obtaining the IPv6 address in the DHCPv6 manner. In this case, after receiving the RA packet, the terminal device of the Windows 7 type finds that both the M identifier and the O identifier are set to 1; the terminal device determines to trigger the DHCPv6 process shown in FIG. 4, to obtain the other network configuration information such as the stateful IPv6 address and the IPv6 address of the DNS server.

Because an iOS terminal device supports obtaining the IPv6 address in both the DHCPv6 manner and the IPv6 stateless autoconfiguration manner, after receiving the RA packet, the iOS terminal device may perform a stateless address configuration process based on an indication of the RDNSS option field, to obtain the IPv6 address; perform a stateful DHCPv6 process based on an indication of the M identifier and the O identifier, to obtain the IPv6 address; or perform both IPv6 autoconfiguration processes. For example, because both the M identifier and the O identifier are set to 1, after obtaining the IPv6 address in the IPv6 stateless autoconfiguration manner, the iOS terminal device still initiates a DHCPv6 solicit request; in this case, the IPv6 address is obtained twice. It should be understood that, in this scenario, IPv6 addresses obtained by the iOS terminal device in the two IPv6 address configuration manners are the same, and only packet redundancy exists.

In this embodiment of this application, both the M identifier and the O identifier in the RA packet are set to 1, to be compatible with all types of terminal devices. This avoids an exception that may occur in a process in which the terminal device obtains the IPv6 address when only the M identifier is set to 1. In a possible design, a management server associated with the routing device may directly deliver a configuration to the routing device in a character string manner, to forcibly set both the M identifier and the O identifier in the RA packet sent by the routing device to 1, and set that the RA packet carries the RDNSS option field by default, thereby simplifying a configuration rule of the RA packet.

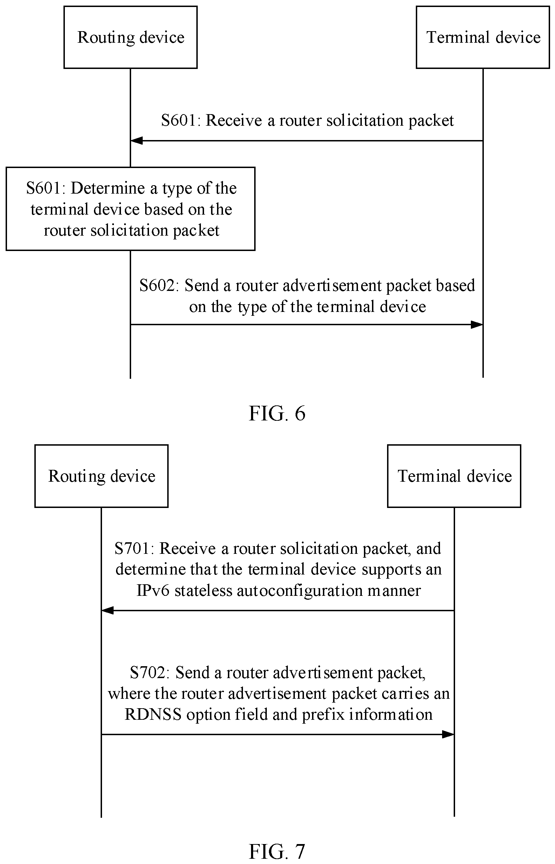

FIG. 6 shows an example of another IPv6 address configuration method according to an embodiment of this application. As shown in FIG. 5, the method includes the following steps.

Step S601: A routing device receives a router solicitation packet sent by a terminal device, and determines a type of the terminal device based on the router solicitation packet.

Step S602: The routing device sends a router advertisement packet to the terminal device based on the type of the terminal device, where the router advertisement packet includes first information or second information; when the type of the terminal device indicates that the terminal device supports obtaining an IPv6 address in a DHCPv6 manner, the router advertisement packet includes the first information, where the first information is used to indicate the terminal device to obtain the IPv6 address in the DHCPv6 manner; and when the type of the terminal device indicates that the terminal device supports obtaining an IPv6 address in an IPv6 stateless autoconfiguration manner, the router advertisement packet includes the second information, where the second information is used to indicate the terminal device to obtain the IPv6 address in the IPv6 stateless autoconfiguration manner.

In step S601, the router solicitation RS packet may include configuration information related to the terminal device, and the routing device may identify the type of the terminal device based on the configuration information. As described above, the type of the terminal device herein means that the terminal device is an Android terminal device, a terminal device of a Windows 7 type, or an iOS terminal device. Further, the routing device may determine, based on the type of the terminal device, a degree of support of the terminal device for IPv6, that is, whether the terminal device supports obtaining the IPv6 address in the IPv6 stateless autoconfiguration manner, and whether the terminal device supports obtaining the IPv6 address in the DHCPv6 manner.

In a possible implementation, the configuration information may be a MAC address that is of the terminal device and that is carried in the RS packet, and the routing device determines the type of the terminal device based on the MAC address of the terminal device and a preset rule. In another possible implementation, the configuration information may be an option field that is in the RS packet and that is used to indicate vendor information of the terminal device, for example, an option 16 field. The routing device may determine the type of the terminal device based on content of the option field and another specified rule. Certainly, this embodiment of this application is not limited to the two implementations. The configuration information may alternatively be configuration information other than the MAC address and the option 16 field, provided that the type of the terminal device or the degree of support of the terminal device for IPv6 can be determined by using the configuration information. In a possible design, the terminal device may directly obtain, based on the configuration information, the degree of support of the terminal device for IPv6, and further send the RA packet to the terminal device based on the degree of support of the terminal device for IPv6. This is not specifically limited in this embodiment of this application.

In step S602, the router advertisement RA packet sent by the routing device to the terminal device carries the first information or the second information. Specifically, in a case in which the type of the terminal device indicates that the terminal device supports obtaining the IPv6 address only in the DHCPv6 manner, the routing device may carry the first information in the RA packet sent to the terminal device. In this way, after receiving the RA packet, the terminal device may trigger, based on an indication of the first information, the DHCPv6 process shown in FIG. 4, to further obtain an IPv6 address allocated by the routing device to the terminal device. In this scenario, the RA packet sent by the routing device may further include third information, where the third information is used to indicate the terminal device to obtain an IPv6 address of a DNS server in the DHCPv6 manner. In this way, the terminal device may obtain, in the DHCPv6 process, the IPv6 address and other network configuration information including the IPv6 address of the DNS server.

In a case in which the type of the terminal device indicates that the terminal device supports obtaining the IPv6 address only in the IPv6 stateless autoconfiguration manner, the routing device may carry the second information in the RA packet sent to the terminal device. Further, in this scenario, the RA packet further carries prefix information, where the prefix information is used to support the terminal device in obtaining the IPv6 address in the IPv6 stateless autoconfiguration manner. For example, the prefix information may be a 64-bit global IPv6 address prefix. In this way, after receiving the RA packet, the terminal device may determine, based on the second information in the RA packet, to obtain the IPv6 address in the IPv6 stateless autoconfiguration manner, extract the prefix information allocated to the terminal device from the RA packet, and use a random algorithm to obtain, through calculation, the IPv6 address based on the prefix information and interface information of the terminal device, for example, the MAC address of the terminal device.

In a case in which the type of the terminal device indicates that the terminal device not only supports obtaining the IPv6 address in the DHCPv6 manner, but also supports obtaining the IPv6 address in the IPv6 stateless autoconfiguration manner, the routing device may carry either the first information or the second information in the RA packet sent to the terminal device, to ensure that the terminal device can obtain the IPv6 address in either the DHCPv6 manner or the IPv6 stateless autoconfiguration manner. In a possible design, the routing device may also directly carry the first information in the RA packet sent to the terminal device, so that the terminal device preferentially obtains the IPv6 address in the DHCPv6 manner. Alternatively, the routing device may directly carry the second information in the RA packet, so that the terminal device preferentially obtains the IPv6 address in the IPv6 stateless autoconfiguration manner. In another possible design, the routing device may further carry both the first information and the second information in the RA packet, and the terminal device determines an obtaining manner of the IPv6 address.

It may be understood that, when the RA packet includes the first information, the RA packet further includes the third information, to indicate a manner of obtaining the other network configuration information. When the RA packet includes the second information, the RA packet further includes the prefix information, so that the terminal device obtains the IPv6 address based on the prefix information.

Similarly, in this embodiment of this application, a person skilled in the art may also perform proper configuration on information such as the first information, the second information, and the third information based on functions of fields in the RA packet. In a possible implementation, the first information may be managed address configuration information, namely, an M flag. The M flag is a field that occupies 1 bit in the RA packet. When the M flag is set to 1, it indicates that the terminal device should obtain a stateful IPv6 address in the DHCPv6 manner. The second information may be recursive DNS server information. The recursive DNS server information may be an RDNSS option field in the RA packet. The RDNSS option field includes IPv6 addresses of one or more recursive DNS servers. When the option field includes IPv6 addresses of a plurality of recursive DNS servers, the IPv6 addresses of the plurality of recursive DNS servers have a same life cycle. The third information may be other configuration information, namely an O flag. The O flag is also a field that occupies 1 bit in the RA packet. When the O identifier is set to 1, it indicates that the terminal device obtains, in the DHCPv6 manner, the other network configuration information other than the IPv6 address, for example, an IPv6 address and a domain name of a DNS server.

According to the technical solution in this embodiment of this application, the routing device can carry, in the RA packet based on the type of the terminal device, the indication information corresponding to the IPv6 address configuration manner supported by the routing device. In this way, different types of terminal devices can be compatible with, so that all types of terminal devices can use IPv6 addresses to access the internet. In addition, real-time information exchange can be implemented. This minimizes information redundancy in the RA packet, and effectively improves flexibility and efficiency of IPv6 address configuration.

For example, as shown in FIG. 7, after the routing device receives the RS packet sent by the terminal device, if determining that the terminal device is an Android terminal device, the routing device may send the RA packet to the terminal device, and carry, in the RA packet, the RDNSS option field and the 64-bit global address prefix that is used for IPv6 stateless autoconfiguration. In this way, after receiving the RA packet, the terminal device finds that the RA packet carries the RDNSS option field, determines to use the IPv6 stateless autoconfiguration manner to obtain the IPv6 address, and uses the random algorithm to the IPv6 address based on the global address prefix provided in the RA packet and the interface information of the terminal device.

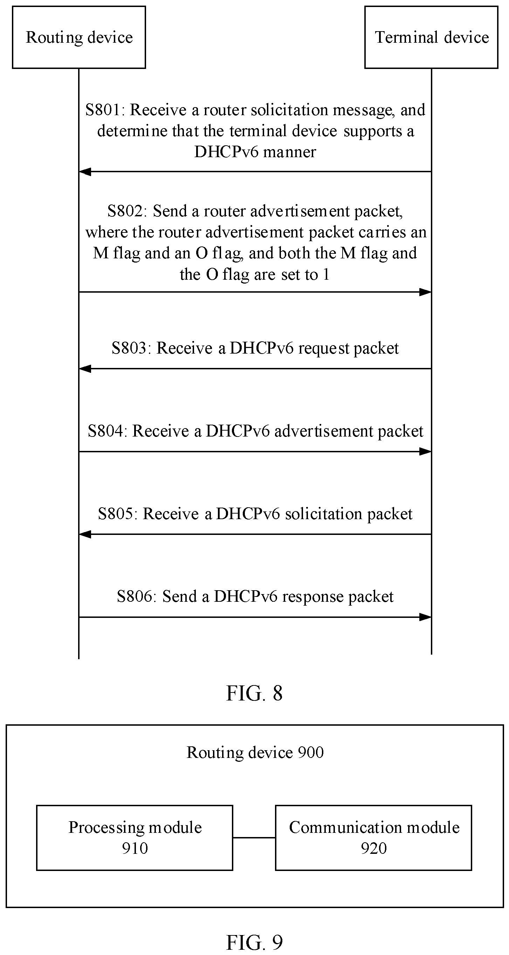

As shown in FIG. 8, after the routing device receives the RS packet sent by the terminal device, if determining that the terminal device is a terminal device of a Windows 7 type, the routing device may send the RA packet to the terminal device, and carry the M flag and the O flag in the RA packet. Both the M flag and the O flag are set to 1. In this way, after receiving the RA packet, the terminal device may trigger, based on an indication of the M flag and the O flag, a DHCPv6 process shown in step S803 to step S806, and finally obtain the IPv6 address allocated by the routing device to the terminal device and the other network configuration information.

An iOS terminal device can obtain the IPv6 addresses in the IPv6 stateless address autoconfiguration manner or in the stateful DHCPv6 manner. Therefore, after determining that the terminal device is the iOS terminal device, the routing device may select, based on a plurality of factors, for example, network configurations of an operator, a proper solution from the following plurality of configurations of the RA packet. (1): Carry the RDNSS option field in the RA packet, and set both the M flag and the O flag to 0. (2): Carry the RDNSS option field in the RA packet, set the M flag to 1, and set the O flag to 0. (3): Carry no RDNSS option field in the RA packet, and set both the M flag and the O flag to 1. (4): Carry no RDNSS option field in the RA packet, set the M flag to 1, and set the O flag to 0.

Based on a same inventive concept, an embodiment of this application further provides a routing device, configured to perform any one of the foregoing method embodiments. FIG. 9 is a schematic structural diagram of a routing device according to an embodiment of this application. As shown in FIG. 9, the routing device includes a processing module 910 and a communication module 920.

The processing module 910 is configured to generate a router advertisement packet, or an operation of determining a type of a terminal device based on a router solicitation packet. The communication module 920 is configured to: receive the router solicitation packet sent by a terminal device, and send the router advertisement packet to the terminal device. It should be understood that the processing module 910 in this embodiment of the present invention may be implemented by a processor or a processor-related circuit component, and the communication module 920 may be implemented by a transceiver or a transceiver-related circuit component.

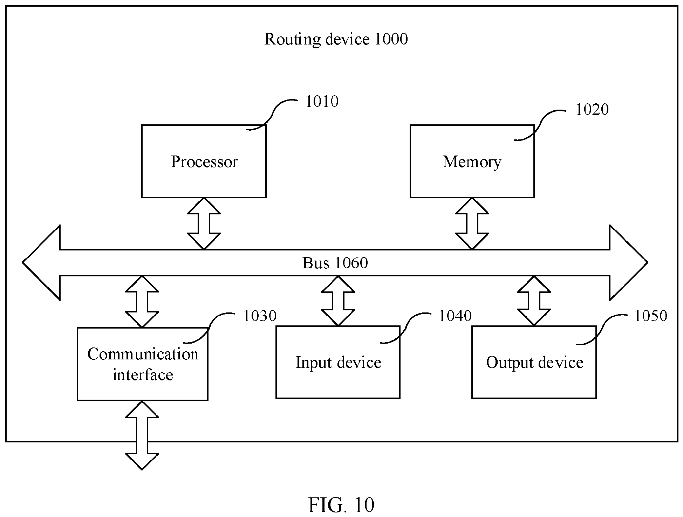

FIG. 10 is another schematic structural diagram of a routing device according to an embodiment of this application. As shown in FIG. 10, the routing device 1000 includes a processor 1010, a memory 1020, and a communication interface 1030. Optionally, the routing device 1000 further includes an input device 1040, an output device 1050, and a bus 1060. The processor 1010, the memory 1020, the communication interface 1030, the input device 1040, and the output device 1050 are connected to each other through the bus 1060. The memory 1020 stores instructions or programs, and the processor 1010 is configured to execute the instructions or the programs stored in the memory 1020. When the instructions or the programs stored in the memory 1020 are executed, the processor 1010 is configured to perform an operation performed by the processing module 910 in the foregoing embodiment, and the communication interface 1030 is configured to perform an operation performed by the communication module 920 in the foregoing embodiment.

It should be noted that the apparatus 900 or 1000 provided in the embodiment of this application may be corresponding to the routing device in S301 and S302 or step S601 and step S602 in the IPv6 address configuration method provided in the embodiment of the present invention, and operations and/or functions of the modules in the routing device 900 or the routing device 1000 are separately used to implement corresponding procedures in the methods shown in FIG. 3 to FIG. 8. For brevity, details are not described herein again.

It should be understood that, the processor mentioned in the embodiments of this application may be a central processing unit (central processing unit, CPU); or may be another general purpose processor, a digital signal processor (digital signal processor, DSP), an application-specific integrated circuit (application specific integrated circuit, ASIC), a field programmable gate array (field programmable gate array, FPGA), or another programmable logical device, discrete gate or transistor logical device, discrete hardware component, or the like. The general purpose processor may be a microprocessor, or the processor may be any conventional processor or the like.

It may be understood that the memory mentioned in the embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general purpose processor, a DSP, an ASIC, an FPGA or another programmable logic device, a discrete gate or a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An IPv6 address configuration method, wherein the method comprises:
generating, by a routing device, a router advertisement packet, wherein the router advertisement packet comprises first information and second information, the first information is used to indicate a terminal device to obtain an IPv6 address in a DHCPv6 manner, the second information is used by the terminal device to obtain an IPv6 address in an IPv6 stateless autoconfiguration manner, and the routing device is a routing device that supports an IPv6 protocol stack; and
sending, by the routing device, the router advertisement packet to the terminal device.

2. The method according to claim 1, wherein the router advertisement packet further comprises third information and prefix information, the third information is used to indicate the terminal device to obtain an IPv6 address of a DNS server in the DHCPv6 manner, and the prefix information is used to support the terminal device in obtaining an IPv6 address in the IPv6 stateless autoconfiguration manner.

3. The method according to claim 2, wherein the first information is managed address configuration information, the second information is recursive DNS server information, and the third information is other stateful configuration information.

4. The method according to claim 3, wherein after the sending, by the routing device, the router advertisement packet to the terminal device, the method further comprises:
receiving, by the routing device, a DHCPv6 request packet sent by the terminal device;
sending, by the routing device, a DHCPv6 advertisement packet to the terminal device, wherein the DHCPv6 advertisement packet comprises a first IPv6 address allocated to the terminal device;
receiving, by the routing device, a DHCPv6 solicitation packet sent by the terminal device, wherein the DHCPv6 solicitation packet comprises an IPv6 address selected by the terminal device; and
sending, by the routing device, a DHCPv6 reply packet to the terminal device if determining that the IPv6 address selected by the terminal device is the first IPv6 address.

5. An IPv6 address configuration method, wherein the method comprises:
receiving, by a routing device, a router solicitation packet sent by a terminal device, and determining a type of the terminal device based on the router solicitation packet; and
sending, by the routing device, a router advertisement packet to the terminal device based on the type of the terminal device, wherein the router advertisement packet comprises first information or second information; when the type of the terminal device indicates that the terminal device supports obtaining an IPv6 address in a DHCPv6 manner, the router advertisement packet comprises the first information, wherein the first information is used to indicate the terminal device to obtain the IPv6 address in the DHCPv6 manner; and when the type of the terminal device indicates that the terminal device supports obtaining an IPv6 address in an IPv6 stateless autoconfiguration manner, the router advertisement packet comprises the second information, wherein the second information is used to indicate the terminal device to obtain the IPv6 address in the IPv6 stateless autoconfiguration manner.

6. The method according to claim 5, wherein the router solicitation packet comprises a MAC address of the terminal device; and
the determining, by a routing device, a type of the terminal device based on the router solicitation packet comprises:
determining, by the routing device, the type of the terminal device based on the MAC address of the terminal device.

7. The method according to claim 5 or 6, wherein when the type of the terminal device indicates that the terminal device supports obtaining an IPv6 address in the DHCPv6 manner, the router advertisement packet further comprises third information, wherein the third information is used to indicate the terminal device to obtain an IPv6 address of a DNS server in the DHCPv6 manner; and
when the type of the terminal device indicates that the terminal device supports obtaining an IPv6 address in the IPv6 stateless autoconfiguration manner, the router advertisement packet further comprises prefix information, wherein the prefix information is used to support the terminal device in obtaining the IPv6 address in the IPv6 stateless autoconfiguration manner.

8. The method according to claim 7, wherein the first information is managed address configuration information, the second information is recursive DNS server information, and the third information is other stateful configuration information.

9. The method according to claim 8, wherein when the type of the terminal device indicates that the terminal device supports obtaining an IPv6 address in the DHCPv6 manner, after the sending, by the routing device, a router advertisement packet to the terminal device, the method further comprises:
receiving, by the routing device, a DHCPv6 request packet sent by the terminal device;
sending, by the routing device, a DHCPv6 advertisement packet to the terminal device, wherein the DHCPv6 advertisement packet comprises a first IPv6 address allocated to the terminal device;
receiving, by the routing device, a DHCPv6 solicitation packet sent by the terminal device, wherein the second DHCPv6 solicitation packet comprises an IPv6 address selected by the terminal device; and
sending, by the routing device, a DHCPv6 reply packet to the terminal device if determining that the IPv6 address selected by the terminal device is the first IPv6 address.

10. A routing device, wherein the routing device comprises:
a processing module, configured to generate a router advertisement packet, wherein the router advertisement packet comprises first information and second information, the first information is used to indicate a terminal device to obtain an IPv6 address in a DHCPv6 manner, the second information is used by the terminal device to obtain an IPv6 address in an IPv6 stateless autoconfiguration manner, and the routing device is a routing device that supports an IPv6 protocol stack; and
a communication module, configured to send the router advertisement packet to the terminal device.

11. The routing device according to claim 10, wherein the router advertisement packet further comprises third information and prefix information, the third information is used to indicate the terminal device to obtain an IPv6 address of a DNS server in the DHCPv6 manner, and the prefix information is used to support the terminal device in obtaining an IPv6 address in the IPv6 stateless autoconfiguration manner.

12. The routing device according to claim 11, wherein the first information is managed address configuration information, the second information is recursive DNS server information, and the third information is other stateful configuration information.

13. The routing device according to claim 12, wherein the communication module is further configured to:
receive a DHCPv6 request packet sent by the terminal device;
send a DHCPv6 advertisement packet to the terminal device, wherein the DHCPv6 advertisement packet comprises a first IPv6 address allocated to the terminal device;
receive a DHCPv6 solicitation packet sent by the terminal device, wherein the second DHCPv6 solicitation packet comprises an IPv6 address selected by the terminal device; and
send a DHCPv6 reply packet to the terminal device if determining that the IPv6 address selected by the terminal device is the first IPv6 address.

14. A routing device, wherein the routing device comprises:
a communication module, configured to receive a router solicitation packet sent by a terminal device; and
a processing module, configured to: determine, based on the router solicitation packet received by the communication module, a type of the terminal device, and send, by using the communication module, a router advertisement packet to the terminal device based on the type of the terminal device, wherein the router advertisement packet comprises first information or second information; when the type of the terminal device indicates that the terminal device supports obtaining an IPv6 address in a DHCPv6 manner, the router advertisement packet comprises the first information, wherein the first information is used to indicate the terminal device to obtain the IPv6 address in the DHCPv6 manner; and when the type of the terminal device indicates that the terminal device supports obtaining an IPv6 address in an IPv6 stateless autoconfiguration manner, the router advertisement packet comprises the second information, wherein the second information is used to indicate the terminal device to obtain the IPv6 address in the IPv6 stateless autoconfiguration manner.

15. The routing device according to claim 14, wherein the router solicitation packet comprises a MAC address of the terminal device; and
the processing module is specifically configured to:
determine the type of the terminal device based on the MAC address of the terminal device.

16. The routing device according to claim 14 or 15, wherein when the type of the terminal device indicates that the terminal device supports obtaining an IPv6 address in the DHCPv6 manner, the router advertisement packet further comprises third information, wherein the third information is used to indicate the terminal device to obtain an IPv6 address of a DNS server in the DHCPv6 manner; and
when the type of the terminal device indicates that the terminal device supports obtaining an IPv6 address in the IPv6 stateless autoconfiguration manner, the router advertisement packet further comprises prefix information, wherein the prefix information is used to support the terminal device in obtaining the IPv6 address in the IPv6 stateless autoconfiguration manner.

17. The routing device according to claim 16, wherein the first information is managed address configuration information, the second information is recursive DNS server information, and the third information is other stateful configuration information.

18. The routing device according to claim 17, wherein when the type of the terminal device indicates that the terminal device supports obtaining an IPv6 address in the DHCPv6 manner, after the communication module sends the router advertisement packet to the terminal device, the communication module is further configured to:
receive a DHCPv6 request packet sent by the terminal device;
send a DHCPv6 advertisement packet to the terminal device, wherein the DHCPv6 advertisement packet comprises a first IPv6 address allocated to the terminal device;
receive a DHCPv6 solicitation packet sent by the terminal device, wherein the second DHCPv6 solicitation packet comprises an IPv6 address selected by the terminal device; and
send a DHCPv6 reply packet to the terminal device if determining that the IPv6 address selected by the terminal device is the first IPv6 address.

19. A routing device, comprising at least one processor, wherein the at least one processor is coupled to at least one memory; and
the at least one processor is configured to execute computer programs or instructions stored in the at least one memory, to enable the apparatus to perform the method according to any one of claims 1 to 9.

20. A computer-readable storage medium, wherein the computer-readable storage medium stores computer programs or instructions; and when the computer programs or the instructions are read and executed by a computer, the computer is enabled to perform the method according to any one of claims 1 to 9.
